# EUROPÄISCHE PATENTSCHRIFT

(11) **EP 2 120 508 B1**
(45) Veröffentlichungstag und Bekanntmachung des Hinweises auf die Patenterteilung: **01.12.2010**
(21) Anmeldenummer: 09006506.1
(22) Anmeldetag: 14.05.2009
(51) Int. Cl.: H05B 6/36, H05B 6/12

(54) **Induktionsheizeinrichtung und Verfahren zur Herstellung einer Induktionsheizeinrichtung**
Induction heater and method for its manufacture
Dispositif de chauffage à induction et procédé de fabrication d'un dispositif de chauffage à induction

(30) Priorität: 16.05.2008 DE 102008024888
(43) Veröffentlichungstag der Anmeldung: 18.11.2009
(73) Patentinhaber: E.G.O. Elektro-Gerätebau GmbH, 75038 Oberderdingen (DE)
(72) Erfinder: Thimm, Dr. Wolfgang, 76137 Karlsruhe (DE)
(74) Vertreter: Patentanwälte Ruff, Wilhelm, Beier, Dauster & Partner

(56) Entgegenhaltungen:
- EP-A- 1 906 709
- WO-A-2006/121838
- WO-A-2007/044959
- DE-A1-102004 044 352
- DE-A1-102005 049 600
- DE-A1-102008 004 410
- JP-A- 2003 109 732
- US-A1- 2008 136 551

## Beschreibung

### Anwendungsgebiet und Stand der Technik

Die Erfindung betrifft eine Induktionsheizeinrichtung sowie ein Verfahren zur Herstellung einer solchen Induktionsheizeinrichtung.

Üblicherweise werden Induktionsspulen von Induktionsheizeinrichtung mit Kupfer oder Aluminium als Leitermaterial hergestellt. Die durch die Induktionsspule übertragene Leistung, beispielsweise bei einem Kochgerät an einen darüber aufgestellten Kochtopf, hängt sowohl von der Frequenz als auch von dem Strom ab, welcher durch die Induktionsspule fließt. Je höher der Strom, desto mehr Leistung kann übertragen werden, und desto schneller oder stärker kann ein Kochtopf erwärmt werden.

Eine Leistungsgrenze für üblicherweise verwendetes Kupfer als Leitermaterial liegt bei einer Stromdichte von 10⁴ A/mm², da das Kupfer dann zu schmelzen beginnt. Insofern wäre es wünschenswert, ein Material zu finden, welches noch höhere Stromdichte ermöglicht. Des weiteren ist häufig auch die thermische Ableitfähigkeit des Leitermaterials ein Problem, auch bei Kupfer.

### Aufgabe und Lösung

Der Erfindung liegt die Aufgabe zugrunde, ein Leitermaterial für Induktionsspulen von Induktionsheizeinrichtungen bereitzustellen und damit eine Induktionsheizeinrichtung herzustellen, mit dem Nachteile des Standes der Technik vermieden werden können und insbesondere höhere Stromdichten möglich sind.

Gelöst wird diese Aufgabe durch eine Induktionsheizeinrichtung mit den Merkmalen des Anspruchs 1 sowie ein Verfahren mit den Merkmalen des Anspruchs 11. Vorteilhafte Ausgestaltungen der Erfindung sind Gegenstand der Ansprüche und werden im Folgenden näher erläutert. Dabei werden manche der Merkmale der Erfindung zwar nur für die Induktionsheizeinrichtung oder nur für das Verfahren zu deren Herstellung beschrieben. Sie sollen jedoch unabhängig davon sowohl für die Induktionsheizeinrichtung als auch für das Verfahren zu deren Herstellung gelten können. Des weiteren wird der Wortlaut der Prioritätsanmeldung DE 102008024888.6 vom 16. Mai 2008 derselben Anmelderin durch ausdrückliche Bezugnahme zum Inhalt der vorliegenden Beschreibung gemacht. Der Wortlaut der Ansprüche wird durch ausdrückliche Bezugnahme zum Inhalt der Beschreibung gemacht.

Es ist vorgesehen, dass die Induktionsspule an einem Träger angeordnet bzw. befestigt ist. Erfindungsgemäß besteht die Induktionsspule aus einem Leitermaterial, welches einen Anteil von mindestens 50% von Carbon-Nanotubes aufweist. Dies bedeutet also, dass ein wesentlicher Anteil des Stromflusses über die Carbon-Nanotubes erfolgt und somit deren sehr vorteilhafte Eigenschaften bezüglich elektrischer Leitfähigkeit, möglicher großer Stromdichte und spezifischen Widerstandes ausgenutzt werden können. Carbon-Nanotubes ermöglichen nämlich eine Stromdichte von bis zu 10⁷ A/mm². Des weiteren weisen Carbon-Nanotubes eine sehr gute Wärmeleitfähigkeit auf, wodurch auch Probleme mit Überhitzung der Induktionsspule reduziert oder sogar ganz vermieden werden können. Vorteilhaft kann der Anteil von Carbon-Nano-tubes am Leitermaterial der Induktionsspule sogar noch höher, insbesondere deutlich höher, liegen. Es ist möglich, dass er bis zu 80% oder sogar mehr, möglicherweise sogar mehr als 90% beträgt. Dadurch ist es möglich, dass bei der Induktionsspule insgesamt die Eigenschaften der Carbon-Nanotubes überwiegen und somit eine sehr vorteilhafte und leistungsfähige Induktionsspule geschaffen werden kann für eine erfindungsgemäße Induktionsheizeinrichtung.

Der Begriff Carbon-Nanotubes soll auch andere Lösungen bzw. Materialien auf Basis des Elements Kohlenstoff beinhalten. So sollen insbesondere auch beispielsweise Diamant oder Carbon-Fasern im Sinne dieser Anmeldung unter dem Oberbegriff Carbon-Nanotubes verstanden bzw. vom Schutzbereich umfasst werden. Ebenso sollen sowohl sogenannte single-walled als auch multi-walled Carbon-Nanotubes damit umfasst werden. Die Herstellung synthetischer Diamanten mit deutlich besserer thermischer Leitfähigkeit als Silber als bevorzugtes Beispiel für ähnliche auf Kohlenstoff basierenden Stoffen mit einer über Silber liegenden thermischen Leitfähigkeit ist dem Fachmann zum Beispiel aus der DE 4038190 A1 bekannt.

Zur Herstellung eines Leitermaterials mit einem hohen Anteil von Carbon-Nanotubes sowie zur Herstellung der Carbon-Nanotubes selbst kann der Fachmann beispielsweise auf die Beschreibung von G. Stelzer "Kohlenstoff-Nanoröhrchen für die Leistungselektronik" in der Zeitschrift Elektronik 2004, Heft 8, Seite 16 zurückgreifen, oder aber auf eine ähnliche Technik zur Herstellung von Glühdrähten für Lampen gemäß Applied Physics-Letters, Vol. 84, Nr. 24 vom 14. Juni 2004. Dort wird eine Anwendung zur Erzeugung von Wärme und vor allem Licht durch ohmsche Erhitzung beschrieben mit den Carbon-Nanotubes.

Zur Herstellung einer solchen Induktionsspule gibt es verschiedene Möglichkeiten. Einmal ist es möglich, dass für die Induktionsspule Leitermaterial, welches eben die Carbon-Nanotubes aufweist, auf einem isolierenden Träger aufgebracht wird. Ein solcher Träger kann beispielsweise aus einem Keramikmaterial bestehen. Die Aufbringung des Leitermaterials kann beispielsweise im Falle einer Dickschichttechnik durch Beschichten erfolgen, insbesondere durch Aufdrucken wie Siebdruck oder dergleichen. Dazu kann Leitermaterial, welches die Carbon-Nano-tubes in hoher Konzentration enthält, mit einem sogenannten Trägermaterial vermischt werden. Ein solches Trägermaterial kann beispielsweise eine Dickschichtpaste sein. Es wird auch explizit auf Verfahren hingewiesen, dünne Diamantschichten auf einem Substrat aufzubringen. Solche Verfahren basieren beispielsweise auf Varianten von CVD (Chemical vapor deposition).

Bei einem Aufbau der erfindungsgemäßen Induktionsspule in Dickschichttechnik ist es vorteilhaft vorgesehen, dass die Breite des Leitermaterials und somit des Leiterquerschnitts der Induktionsspule erheblich größer ist als die Dicke bzw. Höhe. Besonders vorteilhaft beträgt das Verhältnis mindestens 5 : 1. So kann eine flache Induktionsspule geschaffen werden, die auch aufgrund eines günstigen Verhältnisses von Leiterquerschnitt zur Oberfläche eine gute Wärmeabstrahlung und somit geringe Gefahr von Überhitzung aufweist.

Alternativ zu einem Aufdrucken kann die Induktionsspule dadurch hergestellt werden, dass sie aus einem Leitermaterial mit dem entsprechenden Anteil von Carbon-Nanotubes gegossen oder gepresst wird. Dazu kann das Leitermaterial wiederum mit einer Art Trägermaterial oder Grundmaterial vermischt werden und diese Mischung anschließend in die gewünschte Form gebracht werden. Bei dieser Ausbildung, wie insbesondere auch bei der zuvor beschriebenen Dickschicht-Ausbildung mit Drucken, ist durch die Beimischung von einem Trägermaterial oder dergleichen der maximal mögliche Anteil an Carbon-Nanotubes im Leitermaterial in vielen Fällen begrenzt. Soll eine einerseits mechanisch stabile und andererseits zu einem großen Teil aus Carbon-Nanotubes bestehende Induktionsspule geschaffen werden, so ist es in nochmals weiterer Ausbildung der Erfindung möglich, einen Kern, beispielsweise einen Metalldrahtkern, mit Leitermaterial zu umgeben, welches hauptsächlich Carbon-Nanotubes enthält. Die mechanische Stabilität wird hierbei durch den Kern erreicht. Dadurch, dass der Kern von dem Leitermaterial mit Carbon-Nanotubes umgeben ist, ist die Oberfläche zur Wärmeabstrahlung und Kühlung sehr groß.

Bei einer Ausbildung mit Dickschichttechnik sowie einer Beschichtung eines Kerns mit dem Leitermaterial kann eine Schichtdicke relativ gering sein, insbesondere weniger als 5mm oder sogar weniger als 3mm betragen. Dies wird als ausreichend angesehen zur Erreichung einer ausreichend hohen Stromstärke mit mehreren Ampere, da es bei dem Prinzip der induktiven Beheizung ja nicht um erzeugte Wärme im Leitermaterial geht, sondern um die Stärke eines erzeugtem Magnetfeldes.

In nochmals weiterer Ausgestaltung der Erfindung ist es vorstellbar, die Carbon-Nanotubes derart zu einem Leitermaterial zu verarbeiten, möglichst massiv bzw. als Vollmaterial, dass dieses ähnlich wie ein Draht aus Metall in eine gewünschte Form gebracht bzw. gebogen werden kann.

Eine elektrische Kontaktierung an die Induktionsspule bzw. das erfindungsgemäße Leitermaterial kann vorteilhaft über Metallkontakte erfolgen, die ähnlich wie übliche Metallkontakte ausgebildet sein können. So können beispielsweise bei drahtartigem Leitermaterial ausreichend groß dimensionierte kappenartige Kontakte aus Kupfer über Endbereiche der Induktionsspule bzw. des Leitermaterials mit Carbon-Nanotubes geführt werden und daran befestigt werden, beispielsweise durch Verpressen oder Verquetschen. An einem anderen Ende können diese Kontakte übliche Steck- oder Schraubverbindungen aufweisen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: Eine Draufsicht auf eine erfindungsgemäße Induktionsspule für eine Induktionsheizeinrichtung gemäß einer ersten Aus- führung,
- Fig. 2: die Induktionsspule aus Fig. 1 eingebaut in eine Induktions- heizeinrichtung,
- Fig. 3: einen Schnitt durch eine Windung einer Induktionsspule ge- mäß einer zweiten Ausführung und
- Fig. 4: eine Seitenansicht einer elektrischen Kontaktierung an eine Induktionsspule gemäß Fig. 3.

### Detaillierte Beschreibung der Ausführungsbeispiele

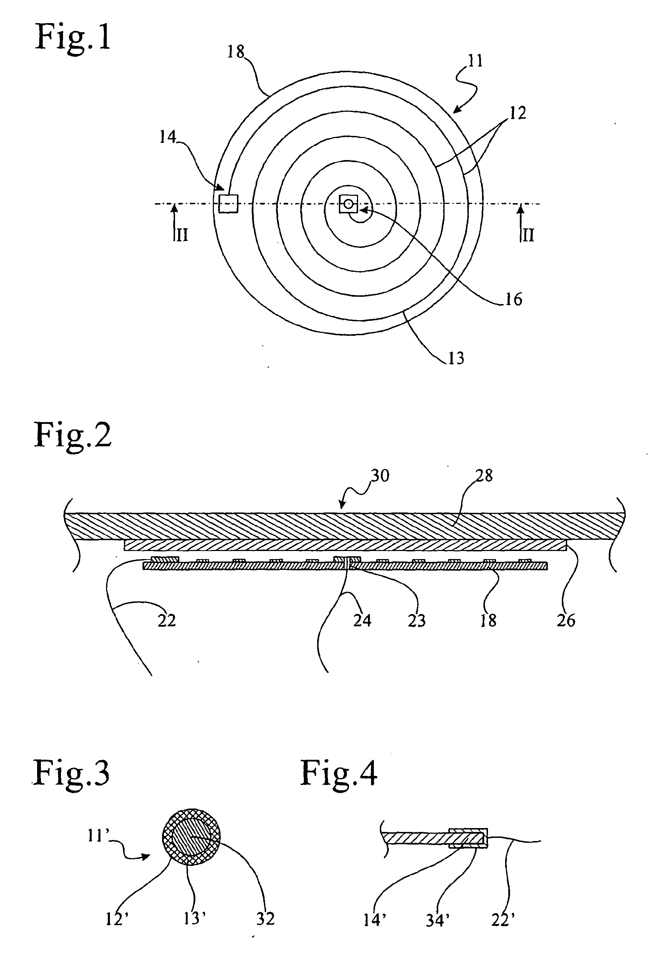

In Fig. 1 ist eine Induktionsspule 11 dargestellt mit mehreren Windungen 12, die spiralartig von einem äußeren ersten Ende 14 zu einem inneren Ende 16 nahe am Mittelpunkt der Induktionsspule 11 verlaufen. Die Windungen 12 der Induktionsspule 11 sind dabei auf einen runden Träger 18 aufgebracht, der beispielsweise aus Keramik oder Kunststoff besteht. Ein elektrischer Anschluss erfolgt über ein äußeres Kontaktfeld 20 am äußeren Ende 14 sowie ein inneres Kontaktfeld 21 am .inneren Ende 16. Am äußeren Kontaktfeld 20 ist ein erstes Anschlusskabel 22 vorgesehen. Am inneren Kontaktfeld 21 ist mit einem Durchbruch 23 durch den Träger 18 ein zweites Anschlusskabel 24 vorgesehen.

Gemäß Fig. 2 kann die Induktionsspule 11 in flacher Bauform mit einer darüber verlaufenden Dämmung 26, wie sie allgemein von Induktionsspule bekannt ist, unter einer Glaskeramik-Kochfeldplatte 28 angeordnet sein. So wird eine Induktionsheizeinrichtung in Form eines Induktionskochfeldes 30 geschaffen. Die Dämmung 26 besteht vorteilhaft aus einem Material mit sehr geringer Wärmeleitfähigkeit und ist für die elektrischen Eigenschaften transparent im Frequenzbereich der Induktionsspule, beeinträchtigt deren Funktion also nicht.

Zur Herstellung der Induktionsspule 11 kann beispielsweise mittels eines Dickschichtverfahrens eine entsprechende Masse aus CNT-Leitermaterial und Dickschichtbinder vermischt werden und so eine Dickschichtpaste ergeben. Diese Dickschichtpaste wird dann in der gewünschten Form auf den Träger 18 aufgebracht, wie sie die fertige Induktionsspule 11 mit den Windungen 12 haben soll. Im wesentlichen können hierbei normale Dickschichtverfahren sowohl bezüglich der Aufbringung als auch bezüglich der Härtung verwendet werden. Wichtig ist es dabei allerdings, zu beachten, dass sich Kohlenstoff und somit auch Carbon-Nanotubes im Allgemeinen bei Temperaturen oberhalb von 400°C - 600°C an Luft bzw. Sauerstoff zersetzen. Daher muss beim Einbrennen unter Schutzgas gearbeitet werden, wobei das Schutzgas Stickstoff sein kann. Alternativ kann ein Einbrennen bei Temperaturen stattfinden, die so niedrig sind, dass die Carbon-Nanotubes nicht beschädigt werden. Dabei ist auch die Geschwindigkeit des Einbrennvorgangs zu beachten. Wichtig ist es auch, nach dem Einbrennen zu kontrollieren, dass die gewünschte hohe Leitfähigkeit tatsächlich erreicht wird und nicht durch isolierende Bereiche in der Dickschichtpaste wieder verloren geht.

Alternativ zu einem Dickschichtverfahren kann das Leitermaterial für die Windungen 12 der Induktionsspule 11 auch durch Drucken, beispielsweise nach Art eines Inkjet-Verfahrens mit entsprechend dünnflüssigem Leitermaterial, aufgebracht werden. Zusätzlich wird noch auf die vorgenannten CVD-Varianten sowie weitere Spritzverfahren hingewiesen.

Bei einem Dickschichtverfahren zur Herstellung der Windungen 12 der Induktionsspule 11 können auf dem Träger 18 zuerst die Kontaktfelder 20 und 21 aufgebracht werden als metallische Kontaktfelder. Dies kann beispielsweise ebenfalls durch ein Dickschichtverfahren gemacht werden. Dann wird sowohl das äußere Ende 14 und das innere Ende 16 derart überlappend über die Kontaktfelder 20 und 21 aufgebracht, so dass hier ein elektrischer Kontakt entsteht. Gleichzeitig können an die Kontaktfelder 20 und 21 das erste Anschlusskabel 22 und das zweite Anschlusskabel 24 angelötet werden oder festgeschweißt oder dergleichen.

Eine alternative Ausführung der Erfindung gemäß der Fig. 3 und 4 sieht vor, dass für eine Induktionsspule 11' bzw. deren Windungen 12' eine Art Kern 32 aus einem Drahtmaterial hergestellt bzw. genommen wird. Auf diesen Kern 32 wird dann CNT-Leitermaterial 13' aufgebracht mit einer gewünschten Schichtdicke und später befestigt bzw. erhärtet. Mögliche Aufbringungsverfahren sind Tauchverfahren des Kerns 32 in das flüssig bereitgestellte Leitermaterial 13', welches dann in einzelnen Schichten den Materialaufbau gibt. Alternativ kann mehrfaches Bespritzen ähnlich einem Lackiervorgang erfolgen.

Als Ergebnis erhält man gemäß der Fig. 3 und 4 Windungen 12' mit rundem Querschnitt, welche entweder bereits in der Form einer fertigen Induktionsspule, beispielsweise spiralartig gemäß Fig. 1, vorliegen können. Alternativ kann ein langgestrecktes Material hergestellt werden, welches dann aber noch derart bearbeitbar sein muss, so dass es in die gewünschte Form gebracht bzw. gebogen werden kann.

Zur elektrischen Kontaktierung kann beispielsweise gemäß Fig. 4 eine Hülse 34', vorteilhaft aus Kupfer, mit einigermaßen engem Passsitz auf ein äußeres Ende 14' der Windung 12' aufgeschoben werden. Ein besserer mechanischer Sitz sowie eine bessere elektrische Kontaktierung kann durch Verquetschen nach Art eines Crimp-Vorgangs oder dergleichen erfolgen. An der Hülse 34' ist ein Anschlusskabel 22' auf übliche Art und Weise vorgesehen für einen elektrischen Anschluss.

Der Vorteil einer Induktionsspule 11 oder 11' mit Leitermaterial, welches einen bedeutenden bzw. hohen Anteil von Carbon-Nanotubes aufweist, liegt weniger in den konstruktiven Ausgestaltungsmöglichkeiten oder dem Herstellungsverfahren, sondern vielmehr in den besonders guten elektrischen und thermischen Eigenschaften des Leitermaterials mit Carbon-Nanotubes, wie sie vorstehend dargelegt worden sind. Ein vorteilhaftes Verhalten bzw. Eigenschaften hinsichtlich Wärmebeständigkeit und Wärmeableitung wird mit der Ausbildung gemäß Fig. 3 erreicht, da dort eine Wärmeabfuhr sozusagen in alle Richtungen möglich ist. Falls es gelingt, das CNT-Leitermaterial 13' bzw. das Leitermaterial ausreichend mechanisch stabil zu gestalten, so könnte bei einer Induktionsspule 11 ähnlich Fig. 3 sogar auf den Kern 32 als stützendes Element verzichtet werden.

Für den kommerziellen Bereich ist es ganz allgemein auch möglich, den Kern aus Materialien herzustellen, welche einen hohen Anteil an Hochtemperatursupraleitern beinhalten, beispielsweise als Metalldraht- oder Metallbandkern, und zusätzlich noch beispielsweise Silber oder Kupfer. Die CNT- bzw. Diamant-Materialien haben dann den Vorteil, dass die Kühlung auf Temperaturen, welche benötigt werden, um den Effekt der Supraleitung zu erreichen, durch die gute Wärmeableitung besonders effektiv sein kann.

Durch die erheblich höheren möglichen Stromdichten bei derartigen Induktionsspulen mit hohem Anteil an Carbon-Nanotubes kann bei einem Induktionskochfeld 30 durch erheblich höhere Ströme eine erheblich höhere Leistungsübertragung erreicht werden.

## Patentansprüche

1. Induktionsheizeinrichtung mit mindestens einer Induktionsspule zur induktiven Erwärmung, insbesondere zur Erwärmung eines Kochgefäßes, wobei die Induktionsspule an einem Träger angeordnet bzw. befestigt ist, **dadurch gekennzeichnet, dass** die Induktionsspule aus einem Leitermaterial besteht, welches einen Anteil von mindestens 50% von Carbon-Nanotubes oder ähnlichen auf Kohlenstoff basierenden Stoffen mit einer thermischen Leitfähigkeit höher als Silber aufweist.

2. Induktionsheizeinrichtung nach Anspruch 1, **dadurch gekennzeichnet, dass** der Anteil von Carbon-Nanotubes oder ähnlichen auf Kohlenstoff basierenden Stoffen mit einer thermischen Leitfähigkeit höher als Silber am Leitermaterial der Induktionsspule mindestens 80% beträgt, vorzugsweise mindestens 90%.

3. Induktionsheizeinrichtung nach Anspruch 1 oder 2, **dadurch gekennzeichnet, dass** die Induktionsspule aus einem auf einen isolierend ausgebildeten Träger aufgedruckten oder aufgespritztem Leitermaterial besteht, vorzugsweise in Dickschichttechnik unter Schutzgasatmosphäre aufgedruckt, wobei der Träger insbesondere ein Keramikmaterial ist.

4. Induktionsheizeinrichtung nach Anspruch 1 oder 2, **dadurch gekennzeichnet, dass** die Induktionsspule aus einem auf einen isolierend ausgebildeten Träger mit einem CVD-Verfahren abgeschiedenen Leitermaterial besteht.

5. Induktionsheizeinrichtung nach Anspruch 3 oder 4, **dadurch gekennzeichnet, dass** die Breite des Leitermaterials der Induktionsspule erheblich größer ist als die Dicke zur Ausbildung einer flachen Induktionsspule, vorzugsweise mindestens fünf mal so groß ist.

6. Induktionsheizeinrichtung nach Anspruch 1 oder 2, **dadurch gekennzeichnet, dass** die Induktionsspule aus dem Leitermaterial durch Gießen oder Pressen hergestellt ist mit einem entsprechenden gießfähigen oder preßfähigen Leitermaterial, wobei vorzugsweise das Leitermaterial in der Form der Induktionsspule gegossen oder gepresst ist.

7. Induktionsheizeinrichtung nach Anspruch 1 oder 2, **dadurch gekennzeichnet, dass** die Induktionsspule aus einem in drahtähnlicher Form vorliegenden Leitermaterial besteht, wobei vorzugsweise das Leitermaterial in die Form der Induktionsspule gebogen ist.

8. Induktionsheizeinrichtung nach Anspruch 1 oder 2, **dadurch gekennzeichnet, dass** die Induktionsspule aus einem Leitermaterial mit Carbon-Nanotubes besteht, welche als Umhüllung um einen Kern, insbesondere einen Metalldrahtkern, ausgebildet ist bzw. welches einen Metalldrahtkern aufweist, wobei vorzugsweise die Schichtdicke der Umhüllung um den Metalldrahtkern in etwa gleichmäßig ist.

9. Induktionsheizeinrichtung nach Anspruch 8, **dadurch gekennzeichnet, dass** die Schichtdicke weniger als 5 mm beträgt, vorzugsweise weniger als 3 mm.

10. Induktionsheizeinrichtung nach einem der vorhergehenden Ansprüche, **dadurch gekennzeichnet, dass** eine elektrische Kontaktierung an die Induktionsspule bzw. das Leitermaterial über Metallkontakte vorgesehen ist, insbesondere Kupferkontakte.

11. Verfahren zur Herstellung einer Induktionsheizeinrichtung nach einem der vorhergehenden Ansprüche, **dadurch gekennzeichnet, dass** das Leitermaterial mit Carbon-Nanotubes oder ähnlichen auf Kohlenstoff basierenden Stoffen mit einer thermischen Leitfähigkeit höher als Silber, insbesondere in Pulverform, mit einem Binder vermischt wird zu einer Paste, wobei die Paste mit der Form der Induktionsspule auf einen Träger aufgebracht wird.

12. Verfahren nach Anspruch 11, **dadurch gekennzeichnet, dass** das Leitermaterial mit einem Trägermaterial zu einer Dickschichtpaste vermischt wird und die Induktionsspule in der gewünschten Form auf den Träger aufgedruckt wird, wobei vorzugsweise ein Einbrennvorgang der Dickschichtpaste bei Temperaturen unter 400°C - 600°C und/oder unter Schutzgasatmosphäre, vorzugsweise Stickstoff, stattfindet.

13. Verfahren nach Anspruch 11, **dadurch gekennzeichnet, dass** das Leitermaterial mit einem Trägermaterial vermischt wird und die Induktionsspule in der gewünschten Form gegossen bzw. gepresst wird.

14. Verfahren nach Anspruch 11, **dadurch** gekenntzeichnet, dass das Leitermaterial mit einem Trägermaterial vermischt wird und auf einen Kern aufgebracht wird, vorzugsweise durch Besprühen, Tauchen oder Pressen, wobei vorzugsweise der Kern die fertige Form der Induktionsspule aufweist.

## Claims

1. Induction heater having at last one induction coil for inductive heating, in particular for heating of a cooking utensil, where the induction coil is arranged or fastened on a support, **characterized in that** the induction coil comprises a conducting material having a proportion of at least 50% of carbon nano-tubes or of similar carbon-based substances with a thermal conductivity higher than that of silver.

2. Induction heater according to Claim 1, **characterized in that** the proportion of carbon nano-tubes or of similar carbon-based substances with a thermal conductivity higher than that of silver in the conducting material of the induction coil is at least 80%, preferably at least 90%.

3. Induction heater according to Claim 1 or 2, **characterized in that** the induction coil comprises a conducting material printed or injected onto a support of insulating design, preferably printed on in thick-film technology under a protective gas atmosphere, where the support is in particular a ceramic material.

4. Induction heater according to Claim 1 or 2, **characterized in that** the induction coil comprises a conducting material deposited by a CVD method onto a support of insulating design.

5. Induction heater according to Claim 3 or 4, **characterized in that** the width of the conducting material of the induction coil is considerably greater than the thickness for formation of a flat induction coil, and preferably at least five times greater.

6. Induction heater according to Claim 1 or 2, **characterized in that** the induction coil is made from the conducting material by casting or pressing with a correspondingly castable or pressable conducting material, where the conducting material is preferably cast or pressed into the shape of the induction coil.

7. Induction heater according to Claim 1 or 2, **characterized in that** the induction coil comprises a conducting material provided in wire-like form, where the conducting material is preferably curved into the shape of the induction coil.

8. Induction heater according to Claim 1 or 2, **characterized in that** the induction coil comprises a conducting material with carbon nano-tubes which is designed as a sheath around a core, in particular a metal wire core, or which has a metal wire core, where the layer thickness of the sheath around the metal wire core is preferably approximately uniform.

9. Induction heater according to Claim 8, **characterized in that** the layer thickness is less than 5 mm, preferably less than 3 mm.

10. Induction heater according to one of the preceding claims, **characterized in that** electrical contacting with the induction coil or with the conducting material is provided via metal contacts, in particular copper contacts.

11. Method for manufacturing an induction heater according to one of the preceding claims, **characterized in that** the conducting material with carbon nano-tubes or with similar carbon-based substances with a thermal conductivity higher than that of silver, in particular in power form, is mixed with a binding agent into a paste which is applied to a support with the shape of the induction coil.

12. Method according to Claim 11, **characterized in that** the conducting material is mixed with a support material into a thick-film paste and the induction coil is printed onto the support in the required form, where a stoving process of the thick-film paste preferably takes place at temperatures below 400°C - 600°C and/or in a protective gas atmosphere, preferably nitrogen.

13. Method according to Claim 11, **characterized in that** the conducting material is mixed with a support material and the induction coil is cast or pressed in the required shape.

14. Method according to Claim 11, **characterized in that** the conducting material is mixed with a support material and applied to a core, preferably by spraying, immersion or pressing, where the core preferably has the final shape of the induction coil.

## Revendications

1. Dispositif de chauffage par induction avec au moins une bobine d'induction pour le chauffage par induction, en particulier le chauffage d'un récipient de cuisson, sachant que la bobine d'induction est disposée ou fixée sur un support, **caractérisé en ce que** la bobine d'induction est composée d'un matériau conducteur présentant une part d'au moins 50 % de nanotubes de carbones ou de substances similaires à base de carbone dont la conductivité thermique est supérieure à l'argent.

2. Dispositif de chauffage par induction selon la revendication 1, **caractérisé en ce que** la part de nanotubes de carbone ou de substances similaires à base de carbone dont la conductivité thermique est supérieure à l'argent s'élève à au moins 80 %, de préférence à au moins 90 %, sur le matériau conducteur de la bobine d'induction.

3. Dispositif de chauffage par induction selon la revendication 1 ou 2, **caractérisé en ce que** la bobine d'induction est constituée d'un matériau conducteur pulvérisé ou imprimé sur un support isolé, de préférence imprimé selon la technique des couches épaisses sous atmosphère gazeuse protectrice, sachant que le support est en particulier un matériau céramique.

4. Dispositif de chauffage par induction selon la revendication 1 ou 2, **caractérisé en ce que** la bobine d'induction est constituée d'un matériau conducteur déposé par dépôt chimique en phase vapeur sur un support isolé.

5. Dispositif de chauffage par induction selon la revendication 3 ou 4, **caractérisé en ce que** la largeur du matériau conducteur de la bobine d'induction est considérablement supérieure à l'épaisseur pour la formation d'une bobine d'induction plate, de préférence au moins cinq fois plus grande.

6. Dispositif de chauffage par induction selon la revendication 1 ou 2, **caractérisé en ce que** la bobine d'induction est fabriquée à partir d'un matériau conducteur par coulée ou moulage par pression avec un matériau conducteur adapté au procédé de coulage ou de moulage par pression correspondant, sachant que le matériau conducteur est de préférence coulé ou moulé par pression à la forme d'une bobine d'induction.

7. Dispositif de chauffage par induction selon la revendication 1 ou 2, **caractérisé en ce que** la bobine d'induction est composée d'un matériau conducteur présentant une forme similaire à un fil, sachant que le matériau conducteur est plié de préférence à la forme de la bobine d'induction.

8. Dispositif de chauffage par induction selon la revendication 1 ou 2, **caractérisé en ce que** la bobine d'induction est constituée d'un matériau conducteur avec des nanotubes de carbone, laquelle bobine est conçue sous forme d'enveloppe entourant un noyau, en particulier un noyau constitué d'un fil métallique, et/ou lequel matériau conducteur présente un noyau en fil métallique, sachant que l'épaisseur de l'enveloppe autour du noyau en fil métallique est de préférence approximativement uniforme.

9. Dispositif de chauffage par induction selon la revendication 8, **caractérisé en ce que** l'épaisseur s'élève à moins de 5 mm, de préférence à moins de 3 mm.

10. Dispositif de chauffage par induction selon l'une des revendications précédentes, **caractérisé en ce qu'**est prévu un contact électrique sur la bobine d'induction ou le matériau conducteur par l'intermédiaire de contacts métalliques, en particulier de contacts en cuivre.

11. Procédé de fabrication d'un dispositif de chauffage par induction selon l'une des revendications précédentes, **caractérisé en ce que** le matériau conducteur présentant des nanotubes de carbone ou des substances similaires à base de carbone dont la conductivité thermique est supérieure à l'argent, en particulier sous forme de poudre, est mélangé à un liant pour obtenir une pâte, sachant que la pâte est appliquée sur un support à la forme de la bobine d'induction.

12. Procédé selon la revendication 11, **caractérisé en ce que** le matériau conducteur est mélangé à un matériau porteur pour obtenir une pâte de couche épaisse, et que la bobine d'induction est moulée par pression à la forme souhaitée sur le support, sachant qu'a lieu de préférence un procédé de cuisson de la pâte de couche épaisse à des températures inférieures à 400 °C - 600 °C et/ou sous atmosphère gazeuse protectrice, de préférence de l'azote.

13. Procédé selon la revendication 11, **caractérisé en ce que** le matériau conducteur est mélangé à un matériau porteur et que la bobine d'induction est coulée ou moulée par pression à la forme souhaitée.

14. Procédé selon la revendication 11, **caractérisé en ce que** le matériau conducteur est mélangé à un matériau porteur et appliqué sur un noyau, de préférence par pulvérisation, immersion ou pressage, sachant que le noyau présente de préférence la forme finie de la bobine d'induction.
